# EUROPEAN PATENT SPECIFICATION

(11) **EP 4 023 926 B1**
(45) Date of publication and mention of the grant of the patent: **15.01.2025**
(21) Application number: 21210629.8
(22) Date of filing: 25.11.2021
(51) Int. Cl.: F17C 1/06

(54) **PRESSURE VESSEL**
DRUCKBEHÄLTER
RÉCIPIENT SOUS PRESSION

(30) Priority: 04.01.2021 KR 20210000442
(43) Date of publication of application: 06.07.2022
(73) Proprietor: Sungwoo Hitech Co., Ltd., Busan 46020 (KR)
(72) Inventor: PARK, Byung Hag, 46014 Busan (KR); BAE, Min Gwan, 47885 Busan (KR)
(74) Representative: Beck & Rössig European Patent Attorneys

(56) References cited:
- EP-A1- 3 489 063
- KR-A- 20190 061 605
- US-A1- 2007 164 561
- US-A1- 2014 144 866

## Description

The present invention relates to a pressure vessel comprising the features of the preamble portion of claim 1.

Generally, gas storage vessels are necessary to store a variety of types of gases such as hydrogen, nitrogen, natural gas, and the like and to discharge stored gases as necessary. Particularly, since gases are in low storage density in a vessel, it is necessary to store gases at high pressure. A pressure vessel utilized in such a high-pressure environment is necessary.

For example, alternative fuel gas vehicles including fuel cell vehicles or compressed natural gas vehicles have storage system structures which vary according to a storage method of fuel gases. Currently, in consideration of a cost, a weight, and simplicity of a storage system, a compressed gas type storage method has been in the spotlight. However, since a gaseous fuel has a low energy storage density, in order to secure more mileage, it is necessary to increase a storage amount or to increase a storage pressure. Particularly, in the case of a vehicle, since there is a limitation in increasing a size of a storage tank due to a limited gas storage system mounting space, it is very significant in a tank technique to safely store gases at a higher pressure.

Also, in the case of a composite tank among fuel gas storage tanks, in order to withstand an internal pressure generated by a compressed gas, a shell is reinforced using fiber-reinforced composites having high specific strength and specific stiffness and a liner configured to maintain gas tightness is inserted therein. Here, forms of fuel gas storage tanks are classified according to materials of liners. A tank in which a metallic liner such as aluminum is inserted is sorted as a type 3, and a tank in which a high-density polymer liner is inserted is sorted as a type 4.

In detail, the type 3 has relatively high stability but has disadvantages such as a high price and low fatigue resistance. On the other hand, in comparison to the type 3, the type 4 has advantages such as a low price and excellent fatigue resistance but has safety problems such as a leakage of hydrogen, decreasing transmission-resistant performance, and the like. Particularly, since a metallic nozzle applied to mount an external valve and a plastic material of a body differ from each other, soundness of air-tightness at a boss extension part is significant.

That is, even when a pressure vessel is manufactured using a plastic liner, it is necessary to use a metallic material or a non-metallic material, which differs from the liner, for a nozzle boss. Accordingly, there is a problem of degradation of adhesion between the metallic or non-metallic nozzle boss and the plastic liner which does not occur when a metallic liner is used.

Here, to redeem the above problems, a plastic clamp is generally used for clamping a plastic liner to a metallic nozzle boss. However, this causes another problem of a difficulty in installing the clamp in the plastic liner.

As another method, a method is used of forming a groove in a nozzle boss and insertion-molding the nozzle boss in the plastic liner. However, it is not easy to implement a perfect adhesion state.

A pressure vessel comprising the feature of the preamble of claim 1 is known from US 2014/144866 A. Further pressure vessels are know from EP 3 489 063 A, US 2007/164561 A1 and KR 2019 0061605 A.

The technical problem of the present invention is to provide a pressure vessel having improved sealing performance.

This technical problem is solved by a pressure vessel comprising the features of claim 1.

Advantageous embodiments are indicated in further claims.

The above and other objects, features and advantages of the present invention will become more apparent to those of ordinary skill in the art by describing exemplary embodiments thereof in detail with reference to the accompanying drawings, in which:
FIG. 1 is a cross-sectional view of a pressure vessel according to one embodiment of the present invention;
FIG. 2 is a partial cross-sectional view of the pressure vessel according to one embodiment of the present invention; and
FIG. 3 is an enlarged view illustrating part A of FIG. 2.

Hereinafter, a pressure vessel according to an exemplary embodiment of the present invention will be described in detail with reference to the drawings.

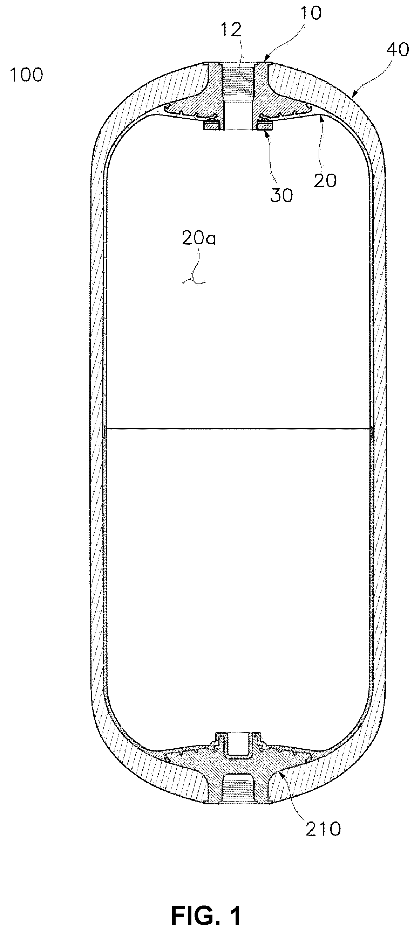

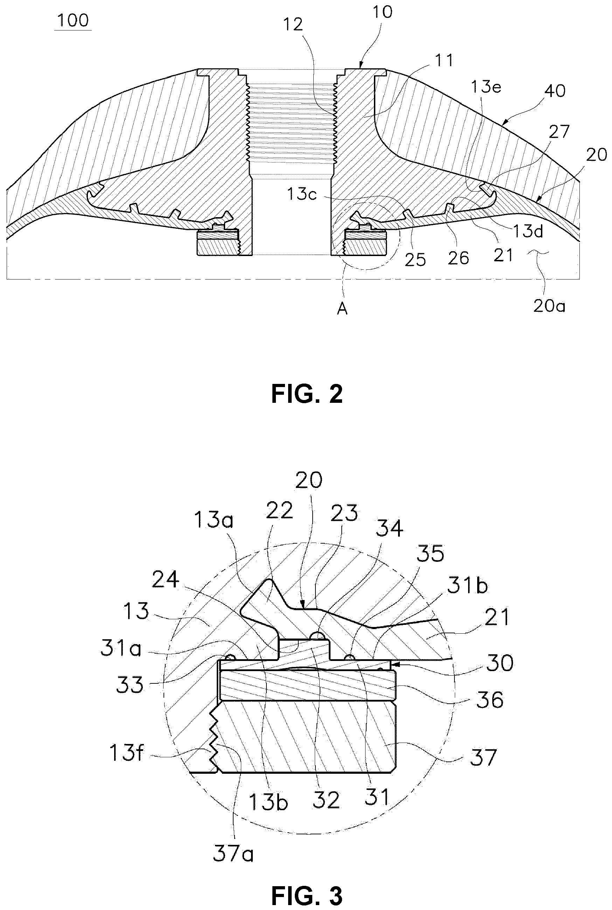

FIG. 1 is a cross-sectional view of a pressure vessel according to one embodiment of the present invention, FIG. 2 is a partial cross-sectional view of the pressure vessel according to one embodiment of the present invention, and FIG. 3 is an enlarged view illustrating part A of FIG. 2.

As shown in FIGS. 1 and 3, a pressure vessel 100 according to one embodiment of the present invention includes a boss portion 10, a liner portion 20 and a sealing portion 30.

Here, the pressure vessel 100 is a vessel used for accommodating a variety of fluids such as oxygen, natural gas, nitrogen, hydrogen, and the like and may be provided to selectively suction and discharge one of the fluids repetitively. Here, the fluid may be stored in the pressure vessel 100 at a high pressure of 700 bars.

Meanwhile, the boss portion 10 may include a boss extension portion 11 having a cylindrical shape and including a through hole 12 formed at a central part thereof to pass therethrough in a vertical direction. Also, the boss portion 10 may include a boss flange portion 13 integrally expanding outward from a bottom of the boss extension portion 11 in a radial direction along a circumferential direction and in which the through hole 12 extends in a vertical direction inward in the radial direction.

Here, the boss extension portion 11 and the boss flange portion 13 are integrally formed and it may be understood that the boss extension portion 11 is formed above the boss portion 10 and the boss flange portion 13 is formed below the boss portion 10.

Here, an outer surface of the boss extension portion 11 may be formed to be rounded and recessed concavely inward in a radial direction along a circumferential direction from a top end toward a boundary area with the boss flange portion 13 therebelow.

Also, a top surface of the boss flange portion 13 may be formed to have a shape expanding outward in a radial direction along a circumferential direction from a boundary area with the boss extension portion 11 toward a bottom end.

Here, the boss portion 10 including the boss extension portion 11 and the boss flange portion 13 may be manufactured by processing steel which is metallic, aluminum which is non-metallic, or the like, but a material thereof is not limited thereto.

Also, the through hole 12 may be formed to pass through the boss extension portion 11 and the boss flange portion 13 along a vertical direction and may have a top end opened outward and a bottom end configured to communicate with a first accommodation space 20a inside the liner portion 20.

In addition, the through hole 12 may include a screw thread formed on an upper inner circumferential surface to be fastened to an external device (not shown) so as to prevent a leakage of a fluid when the fluid flows into or is discharged outward from the pressure vessel 100.

Meanwhile, the pressure vessel 100 may further include a composite cover portion 40 having a top pressed against and covering and surrounding the outer surface of the boss extension portion 11 and the top surface of the boss flange portion 13.

Also, in the composite cover portion 40, an inner surface at a center in a vertical direction which extends downward from the top pressed against and covering the boss portion 10 is provided to surround the liner portion 20.

The composite cover portion 40 may be formed by impregnating reinforced fiber such as carbon fiber, glass fiber, synthetic polyamide fiber, and the like into a resin such as an epoxy resin and the like to be wound or laminated, with a preset thickness, outside the boss portion 10 and the liner portion 20.

Accordingly, the composite cover portion 40 is wound or laminated outside the boss portion 10 and the liner portion 20 so that pressure resistance of the accommodation space 20a inside the liner portion 20 may be improved.

Meanwhile, the liner portion 20 may include the accommodation space 20a provided to have a container shape to communicate with the through hole 12 so as to accommodate a fluid therein while the top is insertion-injection molded and coupled and sealed along a bottom surface of the boss flange portion 13. Also, the liner portion 20 may have a bottom insertion-injection molded and coupled and sealed along a top surface of a boss tail portion 210. Here, the boss tail portion 210 may include the same material as the boss portion 10.

Here, the liner portion 20 may include a synthetic resin material different from that of the boss portion 10. Here, the boss portion 10 may be inserted between an upper mold (not shown) and a lower mold (not shown), and a separation space (not shown) configured to communicate with the boss portion 10 may be formed between the upper mold and the lower mold.

Also, a synthetic resin is injected into the separation space (not shown) and hardened so that the liner portion 20 may be manufactured through insertion-injection molding. Also, the top and the bottom of the liner portion 20 may be separately manufactured and coupled to each other through laser welding.

Meanwhile, at a bottom of the boss flange portion 13, a shape-matching and pressing groove 13a divided and spaced while surrounding a radial outside of the through hole 12 and having a cross section with a diameter continuously increasing in a direction toward a radial inside along a circumferential direction may be formed to be recessed.

Here, the shape-matching and pressing groove 13a may be recessed to have a reversed-trapezoidal cross section. Also, the shape-matching and pressing groove 13a may be formed to be tilted upward in a direction toward a radial inside. For example, referring to FIG. 3, a bottom surface of the shape-matching and pressing groove 13a may be formed to be leveled with a lower surface and may include an inner surface and a top surface which are tilted.

In addition, in the liner portion 20, a shape-matching expansion portion 22 may be formed on a part facing the shape-matching and pressing groove 13a through insertion-injection molding to be pressed against and shape-matched with the shape-matching and pressing groove 13a. Here, the shape-matching expansion portion 22 may be formed on the part facing the shape-matching and pressing groove 13a of the liner portion 20 to have a diameter gradually increasing in a direction toward a radial inside along a circumferential direction so as to be pressed against and shape-matched with the shape-matching and pressing groove 13a.

In detail, a liner extension portion 21 extending inward in a radial direction along the bottom surface of the boss flange portion 13 and having a top surface pressed against the bottom surface of the boss flange portion 13 may be formed above the liner portion 20. Also, an expansion-extension portion 23 may be formed at a radial inner end of the liner extension portion 21 to extend integrally in an outline of the top surface corresponding to the bottom surface of the boss flange portion 13.

Also, the shape-matching expansion portion 22 may further extend toward a radial inside from an inner end of the expansion-extension portion 23 and be formed to be tilted upward in a direction toward a radial inside. For example, referring to FIG. 3, a bottom surface of the shape-matching expansion portion 22 may be formed to be leveled with a lower surface and may include an inner surface and a top surface which are tilted. Also, the shape-matching expansion portion 22 may be manufactured through insertion-injection molding to be pressed against and shape-matched with the shape-matching and pressing groove 13a.

Accordingly, the shape-matching expansion portion 22 of the liner portion 20 is pressed against and shape-matched with the shape-matching and pressing groove 13a formed to be recessed from the bottom of the boss flange portion 13 and have a cross section with a reversed-trapezoidal diameter continuously increasing toward a radial inside along a circumferential direction. Accordingly, since a coupling force with the boss portion 10 may be firmly maintained even when the liner portion 20 is contracted and relaxed repetitively, sealing performance may be notably improved.

Meanwhile, a sealing step 13b protruding outward in a radial direction along a circumferential direction from a bottom of the shape-matching and pressing groove 13a may be formed at the boss flange portion 13.

Also, a sealing groove 24 recessed upward from an area facing a radially outer end of the sealing step 13b may be formed at a bottom of an inner end of the liner portion 20 in a radial direction which extends along the bottom surface of the boss flange portion 13.

Here, the sealing groove 24 may be formed to be recessed upward from a bottom surface of the expansion-extension portion 23. Here, the sealing groove 24 may be formed to have a shape corresponding to a shape of a mold of the liner portion 20 in insertion-injection molding and may be post-processed as necessary.

Also, a height of a top surface of an inside of the sealing groove 24 may be set to be a height corresponding to a central side between a top end and a bottom end of the sealing step 13b.

Also, a top of the radially outer end of the sealing step 13b may come into surface contact with and be pressed against the inner end of the expansion-extension portion 23. Here, the sealing portion 30 may be disposed to be pressed against a bottom of a boundary area between the radially outer end of the sealing step 13b and the inner end of the expansion-extension portion 23.

Meanwhile, the sealing portion 30 may be airtightly coupled to a boundary area between the bottom of the boss flange portion 13 and a top of the liner portion 20 to block a leakage of a fluid accommodated in the accommodation space 20a.

Here, the sealing portion 30 may include an elastic material including ethylene propylene diene monomer (EPDM). Here, EPDM is synthetic rubber having high ozone resistance, weatherability, heat resistance, solvent resistance, and the like, having a specific gravity smaller than other synthetic resins, capable of being highly filled with a filler, oil, and the like, and having highly excellent economic feasibility.

Also, the sealing portion 30 includes a sealing plate 31 and a sealing shape-matching portion 32 which are integrally formed. Here, the sealing plate 31 and the sealing shape-matching portion 32 may include elastic materials including EPDM.

Here, the sealing plate 31 may be provided to have a ring shape extending and divided and spaced apart from the through hole 12 to surround an outside of the through hole 12 in a radial direction along a circumferential direction.

An inner top surface 31a of the sealing plate 31 which is inward in a radial direction is in surface contact with a bottom surface of the sealing step 13b. Simultaneously, an outer top surface 31b of the sealing plate 31 which is outward in the radial direction is in surface contact with a bottom surface of the liner extension portion 21 formed above the liner portion 20.

The sealing shape-matching portion 32 extends integrally from a top between the inner top surface 31a and the outer top surface 31b of the sealing plate 31 inward and outward in the radial direction, respectively.

Also, a radially inner surface of the sealing shape-matching portion 32 is in surface contact with the radially outer end of the sealing step 13b while simultaneously a top surface thereof is in surface contact with and is pressed against and shape-matched with the sealing groove 24.

Accordingly, the top surface of the sealing plate 31 comes into surface contact with the sealing step 13b and the bottom surface of the liner extension portion 21. Simultaneously, since the sealing shape-matching portion 32 extending integrally upward from the top of the sealing plate 31 comes into surface contact twice with the outer end of the sealing step 13b and the sealing groove 24, sealing performance is notably improved.

Meanwhile, a plurality of sealing protrusions including a first sealing protrusion 33, a second sealing protrusion 34, and a third sealing protrusion 35 are formed on the sealing plate 31 and the sealing shape-matching portion 32. A facing surface which is pressurized against and comes into contact with ends of such sealing protrusions may be formed to be flat.

The first sealing protrusion 33 integrally extending and protruding upward toward the bottom surface of the sealing step 13b is continuously formed on the top surface 31a of the sealing plate 31 inward in the radial direction along a circumferential direction.

Here, a top end of the first sealing protrusion 33 is elastically pressurized toward the bottom surface of the sealing step 13b. Here, while the top surface 31a of the sealing plate 31 inward in the radial direction comes in surface contact with the bottom surface of the sealing step 13b, a sealing force of an area in which the first sealing protrusion 33 is pressurized upward is further increased.

Also, the second sealing protrusion 34 integrally extending and protruding upward toward the sealing groove 24 is continuously formed on the top surface of the sealing shape-matching portion 32 along a circumferential direction. Here, a top end of the second sealing protrusion 34 is elastically pressurized toward the sealing groove 24. In addition, while the top surface of the sealing shape-matching portion 32 comes into surface contact with the sealing groove 24, a sealing force of an area in which the second sealing protrusion 34 is pressurized upward is further increased.

In addition, the third sealing protrusion 35 integrally extending and protruding upward toward the bottom surface of the liner extension portion 21 is continuously formed on the top surface 31b of the sealing plate 31 outward in the radial direction along a circumferential direction.

Here, a top end of the third sealing protrusion 35 is elastically pressurized toward the bottom surface of the liner extension portion 21. Here, while the top surface 31b of the sealing plate 31 outward in the radial direction comes in surface contact with the bottom surface of the liner extension portion 21, a sealing force of an area in which the third sealing protrusion 35 is pressurized upward is further increased.

That is, the top ends of the first sealing protrusion 33, the second sealing protrusion 34, and the third sealing protrusion 35 may be multiply pressurized upward toward the sealing step 13b, the sealing groove 24, and the liner extension portion 21, and the sealing forces may be focused on the respective pressurized areas.

Accordingly, the first sealing protrusion 33, the second sealing protrusion 34, and the third sealing protrusion 35 are formed on the top surfaces 31a and 31b of the sealing plate 31 inward and outward in the radial direction and the top surface of the sealing shape-matching portion 32.

Accordingly, since the top ends of the first sealing protrusion 33, the second sealing protrusion 34, and the third sealing protrusion 35 may be multiply pressurized intensively toward the sealing step 13b, the sealing groove 24, and the liner extension portion 21, a fluid leakage may be stably blocked.

Meanwhile, a bottom surface of the sealing plate 31 may be formed to be a planarized surface. Also, the sealing portion 30 may further include a sealing pressurizing portion 36 having a ring shape in which a top surface comes into surface contact with the bottom surface of the sealing plate 31 and a radial inner end is pressed against the boss flange portion 13.

Also, the sealing portion 30 may further include a pressurizing nut 37 having a ring shape in which a top surface comes into surface contact with a bottom surface of the sealing pressurizing portion 36 and a fastening screw thread 37a is formed on a radial inside.

Here, a screw coupling portion 13f may be formed on one side of a bottom of the boss flange portion 13 facing a radial inside of the pressurizing nut 37 to allow the fastening screw thread 37a to be coupled thereto.

Accordingly, as the pressurizing nut 37 is fastened and tightened from a bottom to a top, the sealing pressurizing portion 36, the sealing plate 31, and the sealing shape-matching portion 32 are pressurized upward to be pressed against a boundary area between the boss portion 10 and the liner portion 20.

Meanwhile, a first tilted groove 13c recessed to be tilted inward in a radial direction in an upward direction may be formed on the bottom surface of the boss flange portion 13. Also, a second tilted groove 13d recessed to be tilted outward in a radial direction in an upward direction from a position spaced radially outward apart from the first tilted groove 13c may be formed on the bottom surface of the boss flange portion 13.

That is, the first tilted groove 13c and the second tilted groove 13d may be recessed from both sides in a radial direction that is a direction becoming farther away from each other in an upward direction. Here, a first recession angle between the first tilted groove 13c and the liner extension portion 21 may be set to correspond to a second recession angle between the second tilted groove 13d and the liner extension portion 21. On a case-by-case basis, the first recession angle may be set to be different from the second recession angle.

Also, a first tilted protrusion 25 and a second tilted protrusion 26 which are shaped-matched with and inserted into the first tilted groove 13c and the second tilted groove 13d, respectively, may be formed, through insertion-injection molding, on a top surface of the liner extension portion 21 formed above the liner portion 20. Here, the first tilted protrusion 25 and the second tilted protrusion 26 may be integrally formed to extend from the liner extension portion 21.

Here, the first tilted protrusion 25 may extend to be tilted inward in a radial direction from one side of the liner extension portion 21 in an upward direction and be shape-matched with the first titled groove 13c.

Also, the second tilted protrusion 26 may extend to be titled outward in a radial direction from the liner extension portion 21 at a position spaced radially outward apart from the first tilted protrusion 25 in an upward direction and be shape-matched with the second tilted groove 13d. That is, the first tilted protrusion 25 and the second tilted protrusion 26 may extend to both sides in a radial direction that is a direction becoming farther away from each other in an upward direction.

Accordingly, the first tilted groove 13c recessed to be tilted inward in the radial direction in the upward direction and the second tilted groove 13d recessed to be tilted outward in the radial direction toward the top while being spaced apart from the first tilted groove 13c are formed on the bottom surface of the boss flange portion 13.

Also, the first tilted protrusion 25 and the second tilted protrusion 26 of the liner extension portion 21 are insertion-injection molded and shape-matched with the first tilted groove 13c and the second tilted groove 13d. Accordingly, occurrence of a vertical gap and deformation between the boss portion 10 and the liner portion 20 may be minimized so as to minimize a fluid leakage.

Meanwhile, a peripheral shape-matching groove 13e having a cross section with a diameter continuously increasing in a direction toward a radial inside along a circumferential direction may be formed to be recessed from a radially outer end of the boss flange portion 13. Here, the peripheral shape-matching groove 13e may be formed to be recessed from a top surface of the radially outer end of the boss flange portion 13.

Also, a peripheral shape-matching protrusion 27 having a diameter increasing in a direction toward a radial inside along a circumferential direction to be pressed against and shape-matched with the peripheral shape-matching groove 13e may extend and protrude, through insertion-injection molding, above the liner portion 20 facing the peripheral shape-matching groove 13e.

In detail, the peripheral shape-matching protrusion 27 may primarily extend upward from a radial outside of the liner extension portion 21 and secondarily extend and be bent toward the peripheral shape-matching groove 13e so as to surround the radially outer end of the boss flange portion 13. Here, the peripheral shape-matching protrusion 27 may be insertion-injection molded and pressed against and shape-matched with the peripheral shape-matching groove 13e.

Here, on a case-by-case basis, the peripheral shape-matching groove 13e may be formed to be recessed from the radially outer end of the boss flange portion 13 so that a diameter of a cross section may continuously increase in a downward direction along a circumferential direction. Also, on a case-by-case basis, the peripheral shape-matching protrusion 27 may extend and protrude from above the liner portion 20 so that a diameter may increase in a downward direction along a circumferential direction.

Accordingly, the peripheral shape-matching protrusion 27 of the liner portion 20 is insertion-injection molded and shape-matched with the peripheral shape-matching groove 13e recessed from the radially outer end of the boss flange portion 13 in which the diameter of the cross section of the peripheral shape-matching groove 13e continuously increases radially inward along a circumferential direction. Accordingly, occurrence of a vertical gap and deformation between the boss portion 10 and the liner portion 20 may be minimized so as to minimize a fluid leakage.

Also, since the first tilted protrusion 25, the second tilted protrusion 26, and the peripheral shape-matching protrusion 27 of the liner portion 20 firmly fix the boss portion 10 in multiple directions, a fixing force may be notably improved.

According to the embodiment of the present invention, effects are provided as follows.

First, since a shape-matching extension portion of a liner portion is pressed against and shape-matched with a shape-matching and pressing groove formed below a boss flange portion to be recessed and have a cross section having a diameter continuously increasing in an inverted trapezoidal shape inward in a radial direction along a circumferential direction, a coupling force with a boss portion is firmly maintained even when the liner portion is contracted and released so that air-tightness may be notably improved.

Second, since a top surface of a sealing plate comes into surface contact with a sealing step and a bottom surface of a liner extension portion while a sealing shape-matching portion extending upward integrally from a top of the sealing plate simultaneously comes into surface contact twice with an outer end of the sealing step and a sealing groove, sealing performance may be notably improved.

Third, since a plurality of sealing protrusions continuously and multiply protrude upward from an inner top surface and an outer top surface of the sealing plate and a top surface of the sealing shape-matching portion along a circumferential direction so that each of top ends thereof multiply and intensively pressurize the sealing step, the sealing groove, and the liner extension portion, a leakage of a fluid may be stably blocked.

Fourth, since a first tilted protrusion and a second tilted protrusion of the liner extension portion are insertion-injection molded and shape-matched with a first tilted groove recessed from a bottom surface of the boss flange portion to be tilted inward in a radial direction in an upward direction and a second tilted groove recessed to be tilted outward in a radial direction, respectively, a vertical gap and deformation between the boss portion and the liner portion may be minimized so as to minimize a fluid leakage.

Fifth, when an outer shape-matching protrusion of the liner portion is insertion-injection molded and shape-matched with an outer shape-matching groove recessed from an outer end of the boss flange portion to have a cross section with a diameter continuously increasing inward in a radial direction along a circumferential direction, a first tilted protrusion, a second tilted protrusion, and the outer shape-matching protrusion may firmly fix the boss portion in multiple directions so as to notably improve a fixing force.

As described above, the present invention is not limited to the above-described embodiment and may be modified by one of ordinary skill in the art without departing from the scope of the claims.

## Claims

1. A pressure vessel (100) comprising:
a boss portion (10) comprising a boss extension portion (11) having a cylindrical shape in which a through hole (12) is formed at a central part to pass therethrough and a boss flange portion (13) formed below the boss extension portion (11) and integrally expanding outward in a radial direction along a circumferential direction in which the through hole extends in a vertical direction, wherein a sealing step (13b) protruding outward in a radial direction along a circumferential direction is formed on the boss flange portion (13);
a liner portion (20) having a container shape in which an accommodation space (20a) configured to communicate with the through hole (12) is formed to accommodate a fluid therein while a top is insertion-injection molded and seal-coupled along a bottom surface of the boss flange portion (13), wherein a sealing groove (24) facing a radially outer end of the sealing step (13b) is formed to be recessed upward below an inner end of the liner portion (20) extending along the bottom surface of the boss flange portion (13);
a sealing portion (30) seal-coupled to a boundary area between a bottom of the boss flange portion (13) and said top of the liner portion (20) to block leakage of fluid accommodated in the accommodation space (20a), wherein the sealing portion (30) comprises a sealing plate (31) and a sealing shape-matching portion (32) integrally extending upward from a top of the sealing plate (31), said sealing plate (31) surrounding a radial outside of the through hole (12) along a circumferential direction and having an inner top surface (31a) arranged radially inward in radial direction and in surface contact with the bottom surface of the sealing step (13b), and an outer top surface (31b) arranged radially outward in radial direction and in surface contact with a bottom surface of a liner extension portion (21) formed above the liner portion (20), and said sealing shape-matching portion (32) having a radially inner surface in surface contact with the outer end of the sealing step (13b) and a top surface pressed against and shape-matched with the sealing groove (24);
**characterized in that**
a first sealing protrusion (33) and a third sealing protrusion (35) extend upward from said top surfaces (31a, 31b) of the sealing plate (31), and
a second sealing protrusion (34) is formed on a top surface of the sealing shape-matching portion (32) and integrally extends and protrudes toward the sealing groove (24) along a circumferential direction so that a top end is elastically pressurized toward the sealing groove (24).

2. The pressure vessel of claim 1, wherein a shape-matching and pressing groove (13a) is formed below the boss flange portion (13), shape-matching and pressing groove (13a) surrounding a radial outside of the through hole (12) and having a cross section with a diameter continuously increasing inward in a radial inside along a circumferential direction, and
wherein a shape-matching expansion portion (22) is formed on a part of the liner portion (20) facing the shape-matching and pressing groove (13a) through insertion-injection molding and pressed against and shape-matched with the shape-matching and pressing groove (13a).

3. The pressure vessel of claim 1 or 2, wherein the first sealing protrusion (33) integrally extends and protrudes from the inner top surface (31a) of the sealing plate (31) toward the bottom surface of the sealing step (13b) along a circumferential direction so that the top end is elastically pressurized toward the bottom surface of the sealing step (13b).

4. The pressure vessel of one of claim 1 to 3, wherein the third sealing protrusion (35) integrally extends and protrudes from the outer top surface (31b) of the sealing plate (31) toward a bottom surface of the liner extension portion (21) along a circumferential direction so that the top end is elastically pressurized toward the bottom surface of the liner extension portion (21).

5. The pressure vessel of one of claims 1 to 4, wherein a bottom surface of the sealing plate (31) is formed to be a planarized surface, and
wherein the sealing portion (30) further comprises a sealing pressurizing portion (36) having a ring shape in which a top surface is in surface contact with the bottom surface of the sealing plate (31) and a radially inner end is pressed against the boss flange portion (13).

6. The pressure vessel of claim 5, wherein the sealing portion (30) further comprises a pressurizing nut (37) having a ring shape in which a top surface is in surface contact with a bottom surface of the sealing pressurizing portion (36) and a fastening screw thread is formed on a radial inside, and
wherein a screw coupling portion (13f) is formed on one side of a bottom of the boss flange portion facing the radial inside of the pressurizing nut (37) to allow the fastening screw thread to be coupled thereto.

7. The pressure vessel of one of claims 1 to 6, wherein a height of a top surface of the sealing groove (24) is set to be a height corresponding to a central part between a top end and a bottom end of the sealing step (13b).

8. The pressure vessel of one of claims 1 to 7, wherein a first tilted groove (13c) is formed to be recessed in the bottom surface of the boss flange portion (13) to be tilted inward in a radial direction in an upward direction and a second tilted groove (13d) spaced outward apart from the first tilted groove in a radial direction is formed to be recessed to be tilted outward in the radial direction in the upward direction, and
wherein a first tilted protrusion (25) and a second tilted protrusion (26) which are inserted into and shape-matched with the first tilted groove (13c) and the second tilted groove (13d), respectively, are formed on a top surface of the liner extension portion (21) formed above the liner portion (20).

9. The pressure vessel of one of claims 1 to 8, wherein a peripheral shape-matching groove (13e) having a cross section with a diameter continuously increasing toward a radial inside along a circumferential direction is formed to be recessed from a radially outer end of the boss flange portion (13), and
wherein a peripheral shape-matching protrusion (27) having a diameter increasing toward a radial inside along a circumferential direction extends and protrudes from a top of the liner portion facing the peripheral shape-matching groove (13e) to be pressed against and shape-matched with the peripheral shape-matching groove.

## Patentansprüche

1. Druckbehälter (100), umfassend:
einen Ansatzabschnitt (10), der einen Ansatzverlängerungsabschnitt (11) mit einer zylindrischen Form umfasst, in dem ein Durchgangsloch (12) an einem zentralen Teil ausgebildet ist, so dass es durch ihn hindurch verläuft, und einen Ansatzflanschabschnitt (13), der unter dem Ansatzverlängerungsabschnitt (11) ausgebildet ist und sich integral nach außen in einer radialen Richtung entlang einer Umfangsrichtung erstreckt, in der sich das Durchgangsloch in einer vertikalen Richtung erstreckt, wobei eine Dichtungsstufe (13b), die nach außen in einer radialen Richtung entlang einer Umfangsrichtung vorsteht, an dem Ansatzflanschabschnitt (13) ausgebildet ist;
einen Auskleidungsabschnitt (20) mit einer Behälterform, in der ein Aufnahmeraum (20a), der so konfiguriert ist, dass er mit dem Durchgangsloch (12) in Verbindung steht, ausgebildet ist, um ein Fluid darin aufzunehmen, während ein Oberteil entlang einer Bodenfläche des Ansatzflanschabschnitts (13) Insert-spritzgegossen und abdichtend gekoppelt ist, wobei eine Dichtungsnut (24), die einem radial äußeren Ende der Dichtungsstufe (13b) zugewandt ist, so ausgebildet ist, dass sie unter einem inneren Ende des Auskleidungsabschnitts (20), das sich entlang der Bodenfläche des Ansatzflanschabschnitts (13) erstreckt, nach oben zurückgesetzt ist;
einen Dichtungsabschnitt (30), der mit einem Grenzbereich zwischen einem Boden des Ansatzflanschabschnitts (13) und der Oberseite des Auskleidungsabschnitts (20) abdichtend verbunden ist, um eine Leckage von in dem Aufnahmeraum (20a) aufgenommenem Fluid zu blockieren, wobei der Dichtungsabschnitt (30) eine Dichtungsplatte (31) und einen abdichtenden, formangepassten Abschnitt (32) umfasst, der sich integral von einer Oberseite der Dichtungsplatte (31) nach oben erstreckt, wobei die Dichtungsplatte (31) eine radiale Außenseite des Durchgangslochs (12) entlang einer Umfangsrichtung umgibt und eine innere obere Fläche (31a) aufweist, die in radialer Richtung radial nach innen und in Oberflächenkontakt mit der Bodenfläche der Dichtungsstufe (13b) angeordnet ist, und eine äußere obere Fläche (3 1b), die radial nach außen in radialer Richtung und in Oberflächenkontakt mit einer Bodenfläche eines Auskleidungsverlängerungsabschnitts (21) angeordnet ist, der oberhalb des Auskleidungsabschnitts (20) ausgebildet ist, und wobei der abdichtende, formangepasste Abschnitt (32) eine radial innere Fläche in Oberflächenkontakt mit dem äußeren Ende der Dichtungsstufe (13b) und eine obere Fläche aufweist, die gegen die Dichtungsnut (24) gepresst und an diese formangepasst ist;
**dadurch gekennzeichnet, dass**
ein erster Dichtungsvorsprung (33) und ein dritter Dichtungsvorsprung (35) sich von den oberen Oberflächen (31a, 31b) der Dichtungsplatte (31) nach oben erstrecken, und
ein zweiter Dichtungsvorsprung (34) an einer oberen Fläche des abdichtenden, formangepassten Abschnitts (32) ausgebildet ist und sich integral in Richtung der Dichtungsnut (24) entlang einer Umfangsrichtung erstreckt und vorsteht, so dass ein oberes Ende elastisch in Richtung der Dichtungsnut (24) gedrückt wird.

2. Druckbehälter nach Anspruch 1, wobei unter dem Ansatzflanschabschnitt (13) eine formangepasste und drückende Nut (13a) ausgebildet ist, wobei die formangepasste und drückende Nut (13a) eine radiale Außenseite des Durchgangslochs (12) umgibt und einen Querschnitt mit einem Durchmesser aufweist, der entlang einer Umfangsrichtung kontinuierlich nach innen in eine radiale Innenseite zunimmt, und
wobei ein formangepasster Expansionsabschnitt (22) an einem Abschnitt des Auskleidungsabschnitts (20), der der formangepassten und drückenden Nut (13a) zugewandt ist, durch Insert-Spritzgießen gebildet ist und gegen die formangepasste und drückende Nut (13a) gepresst und an diese formangepasst ist.

3. Druckbehälter nach Anspruch 1 oder 2, wobei der erste Dichtungsvorsprung (33) sich integral von der inneren oberen Fläche (31a) der Dichtungsplatte (31) in Richtung der Bodenfläche der Dichtungsstufe (13b) entlang einer Umfangsrichtung erstreckt und vorsteht, so dass das obere Ende elastisch in Richtung der Bodenfläche der Dichtungsstufe (13b) unter Druck gesetzt ist.

4. Druckbehälter nach einem der Ansprüche 1 bis 3, wobei sich der dritte Dichtungsvorsprung (35) integral von der äußeren oberen Fläche (31b) der Dichtungsplatte (31) in Richtung einer unteren Fläche des Auskleidungsverlängerungsabschnitts (21) entlang einer Umfangsrichtung erstreckt und vorsteht, so dass das obere Ende elastisch in Richtung der Bodenfläche des Auskleidungsverlängerungsabschnitts (21) unter Druck gesetzt ist.

5. Druckbehälter nach einem der Ansprüche 1 bis 4, wobei eine Bodenfläche der Dichtungsplatte (31) als ebene Fläche ausgebildet ist, und
wobei der Dichtungsabschnitt (30) ferner einen Dichtungsdruckabschnitt (36) mit einer Ringform umfasst, bei der eine obere Fläche in Oberflächenkontakt mit der Bodenfläche der Dichtungsplatte (31) steht und ein radial inneres Ende gegen den Ansatzflanschabschnitt (13) gedrückt ist.

6. Druckbehälter nach Anspruch 5, wobei der Dichtungsabschnitt (30) ferner eine Druckmutter (37) mit einer Ringform umfasst, bei der eine obere Fläche in Oberflächenkontakt mit einer Bodenfläche des Dichtungsdruckabschnitts (36) steht und ein Befestigungsschraubgewinde an einer radialen Innenseite ausgebildet ist, und
wobei ein Schraubenkupplungsabschnitt (13f) an einer Seite eines Bodens des Ansatzflanschabschnitts ausgebildet ist, der der radialen Innenseite der Druckmutter (37) zugewandt ist, damit das Befestigungsschraubgewinde damit koppelbar ist.

7. Druckbehälter nach einem der Ansprüche 1 bis 6, wobei eine Höhe einer oberen Fläche der Dichtungsnut (24) auf eine Höhe eingestellt ist, die dem zentralen Teil zwischen dem oberen Ende und dem unteren Ende der Dichtungsstufe (13b) entspricht.

8. Druckbehälter nach einem der Ansprüche 1 bis 7, wobei eine erste geneigte Nut (13c) vertieft in der Bodenfläche des Ansatzflanschabschnitts (13) ausgebildet ist, so dass sie in einer radialen Richtung in einer Aufwärtsrichtung nach innen geneigt ist, und eine zweite geneigte Nut (13d), die von der ersten geneigten Nut in einer radialen Richtung nach außen beabstandet ist, vertieft ausgebildet ist, so dass sie in der radialen Richtung in der Aufwärtsrichtung nach außen geneigt ist, und
wobei ein erster geneigter Vorsprung (25) und ein zweiter geneigter Vorsprung (26), die jeweils entsprechend in die erste geneigte Nut (13c) und die zweite geneigte Nut (13d) eingesetzt und an deren Form angepasst sind, an einer oberen Fläche des Auskleidungsverlängerungsabschnitts (21) ausgebildet sind, der über dem Auskleidungsabschnitt (20) ausgebildet ist.

9. Druckbehälter nach einem der Ansprüche 1 bis 8, wobei eine periphere formangepasste Nut (13e) mit einem Querschnitt, dessen Durchmesser entlang einer Umfangsrichtung zur radialen Innenseite hin kontinuierlich zunimmt, so ausgebildet ist, dass sie von einem radial äußeren Ende des Ansatzflanschabschnitts (13) zurückgesetzt ist, und
wobei sich ein peripherer formangepasster Vorsprung (27) mit einem Durchmesser, der in Richtung einer radialen Innenseite entlang einer Umfangsrichtung zunimmt, von einer Oberseite des Auskleidungsabschnitts, die der peripheren formangepassten Nut (13e) zugewandt ist, erstreckt und vorsteht, um gegen die periphere formangepasste Nut gepresst und an diese formangepasst zu werden.

## Revendications

1. Récipient sous pression (100) comprenant:
une partie de bossage (10) comprenant une partie d'extension de bossage (11) ayant une forme cylindrique dans laquelle un trou traversant (12) est formé au niveau d'une partie centrale pour passer à travers celle-ci et une partie bride de bossage (13) formée sous la partie d'extension de bossage (11) et s'étendant intégralement vers l'extérieur dans une direction radiale le long d'une direction circonférentielle dans laquelle le trou traversant s'étend dans une direction verticale, dans laquelle une marche d'étanchéité (13b) faisant saillie vers l'extérieur dans une direction radiale le long d'une direction circonférentielle est formée sur la partie bride de bossage (13);
une partie de revêtement (20) ayant une forme de récipient dans laquelle un espace de logement (20a) configuré pour communiquer avec le trou traversant (12) est formé pour accueillir un fluide à l'intérieur tandis qu'un partie supérieure est moulée par insertion-injection et couplée de manière étanche le long d'une surface inférieure de la partie bride de bossage (13), dans laquelle une rainure d'étanchéité (24) faisant face à une extrémité radialement extérieure de la marche d'étanchéité (13b) est formée pour être encastrée vers le haut sous une extrémité intérieure de la partie de revêtement (20) s'étendant le long de la surface inférieure de la partie bride de bossage (13);
une partie d'étanchéité (30) couplée de manière étanche à une zone limite entre une partie inférieure de la partie bride de bossage (13) et ladite partie supérieure de la partie de revêtement (20) pour bloquer la fuite d'un fluide accueilli dans l'espace de logement (20a), dans lequel la partie d'étanchéité (30) comprend une plaque d'étanchéité (31) et une partie d'adaptation de forme d'étanchéité (32) s'étendant intégralement vers le haut à partir d'une partie supérieure de la plaque d'étanchéité (31), ladite plaque d'étanchéité (31) entourant un extérieur radial du trou traversant (12) le long d'une direction circonférentielle et ayant une surface supérieure intérieure (3la) disposée radialement vers l'intérieur dans une direction radiale et en contact de surface avec la surface inférieure de la marche d'étanchéité (13b), et une surface supérieure extérieure (31b) disposée radialement vers l'extérieur dans une direction radiale et en contact de surface avec une surface inférieure d'une partie d'extension de revêtement (21) formée au-dessus de la partie de revêtement (20), et ladite partie d'adaptation de forme d'étanchéité (32) ayant une surface radialement intérieure en contact de surface avec l'extrémité extérieure de la marche d'étanchéité (13b) et une surface supérieure pressée contre et correspondant en termes de forme à la rainure d'étanchéité (24);
**caractérisé en ce que**
une première saillie d'étanchéité (33) et une troisième saillie d'étanchéité (35) s'étendent vers le haut à partir desdites surfaces supérieures (31a, 31b) de la plaque d'étanchéité (31), et
une deuxième saillie d'étanchéité (34) est formée sur une surface supérieure de la partie d'adaptation de forme d'étanchéité (32) et s'étend et fait saille intégralement vers la rainure d'étanchéité (24) le long d'une direction circonférentielle de sorte qu'une extrémité supérieure est élastiquement pressurisée vers la rainure d'étanchéité (24).

2. Récipient sous pression selon la revendication 1, dans lequel une rainure d'adaptation de forme et de pressage (13a) est formée sous la partie bride de bossage (13), la rainure d'adaptation de forme et de pressage (13a) entourant un extérieur radial du trou traversant (12) et ayant une section transversale avec un diamètre augmentant continuellement vers l'intérieur dans un intérieur radial le long d'une direction circonférentielle, et
dans lequel une partie d'expansion d'adaptation de forme (22) est formée sur une partie de la partie de revêtement (20) faisant face à la rainure d'adaptation de forme et de pressage (13a) par moulage par insertion-injection et étant pressée contre la rainure d'adaptation de forme et de pressage (13a).

3. Récipient sous pression selon la revendication 1 ou 2, dans lequel la première saillie d'étanchéité (33) s'étend et fait saillie intégralement à partir de la surface supérieure intérieure (3la) de la plaque d'étanchéité (31) vers la surface inférieure de la marche d'étanchéité (13b) le long d'une direction circonférentielle de sorte que l'extrémité supérieure est élastiquement pressurisée vers la surface inférieure de la marche d'étanchéité (13b).

4. Récipient sous pression selon l'une des revendications 1 à 3, dans lequel la troisième saillie d'étanchéité (35) s'étend et fait saillie intégralement à partir de la surface supérieure extérieure (31b) de la plaque d'étanchéité (31) vers une surface inférieure de la partie d'extension de revêtement (21) le long d'une direction circonférentielle de sorte que l'extrémité supérieure est élastiquement pressurisée vers la surface inférieure de la partie d'extension de revêtement (21).

5. Récipient sous pression selon l'une des revendications 1 à 4, dans lequel une surface inférieure de la plaque d'étanchéité (31) est formée pour être une surface planarisée, et
dans lequel la partie d'étanchéité (30) comprend en outre une partie de pressurisation d'étanchéité (36) ayant une forme d'anneau dans laquelle une surface supérieure entre en contact de surface avec la surface inférieure de la plaque d'étanchéité (31) et une extrémité radialement intérieure est pressée contre la partie bride de bossage (13).

6. Récipient sous pression selon la revendication 5, dans lequel la partie d'étanchéité (30) comprend en outre un écrou de pressurisation (37) ayant une forme d'anneau dans lequel une surface supérieure est en contact de surface avec une surface inférieure de la partie de pressurisation d'étanchéité (36) et un filetage de vis de fixation est formé sur un intérieur radial, et
dans lequel une partie de couplage à vis (13f) est formée sur un côté d'une partie inférieure de la partie bride de bossage faisant face à l'intérieur radial de l'écrou de pressurisation (37) pour permettre au filetage de vis de fixation d'être couplé à celui-ci.

7. Récipient sous pression selon l'une des revendications 1 à 6, dans lequel une hauteur d'une surface supérieure de la rainure d'étanchéité (24) est définie pour être une hauteur correspondant à une partie centrale entre une extrémité supérieure et une extrémité inférieure de la marche d'étanchéité (13b).

8. Récipient sous pression selon l'une des revendications 1 à 7, dans lequel une première rainure inclinée (13c) est formée pour être encastrée dans la surface inférieure de la partie bride de bossage (13) pour être inclinée vers l'intérieur dans une direction radiale dans une direction vers le haut et une deuxième rainure inclinée (13d) espacée vers l'extérieur de la première rainure inclinée dans une direction radiale est formée pour être encastrée pour être inclinée vers l'extérieur dans la direction radiale dans la direction vers le haut, et
dans lequel une première saillie inclinée (25) et une deuxième saillie inclinée (26) qui sont insérées et adaptées à la première rainure inclinée (13c) et à la deuxième rainure inclinée (13d), respectivement, sont formées sur une surface supérieure de la partie d'extension de revêtement (21) formée au-dessus de la partie de revêtement (20).

9. Récipient sous pression selon l'une des revendications 1 à 8, dans lequel une rainure d'adaptation de forme périphérique (13e) ayant une section transversale avec un diamètre augmentant continuellement vers un intérieur radial le long d'une direction circonférentielle est formée pour être encastrée à partir d'une extrémité radialement extérieure de la partie bride de bossage (13), et
dans lequel une saillie d'adaptation de forme périphérique (27) ayant un diamètre augmentant vers un intérieur radial le long d'une direction circonférentielle s'étend et fait saillie à partir d'une partie supérieure de la partie de revêtement faisant face à la rainure d'adaptation de forme périphérique (13e) pour être pressée contre et correspondre en termes de forme à la rainure d'adaptation de forme périphérique.
